(19) Europäisches Patentamt / European Patent Office / Office européen des brevets

(11) **EP 2 816 431 A2**

(12) **EUROPEAN PATENT APPLICATION**

(43) Date of publication:
**24.12.2014 Bulletin 2014/52**

(51) Int Cl.:
**G05B 23/02** (2006.01)

(21) Application number: **14172759.4**

(22) Date of filing: **17.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.06.2013 US 201361837339 P**
**01.04.2014 US 201414242506**

(71) Applicant: **Rockwell Automation Technologies, Inc.**
**Mayfield Heights, OH 44124 (US)**

(72) Inventor: **Hessmer, Rainer**
**Rancho Santa Margarita**
**CA California 92688 (US)**

(74) Representative: **Grünecker, Kinkeldey, Stockmair & Schwanhäusser**
**Leopoldstrasse 4**
**80802 München (DE)**

(54) **Information platform for industrial automation stream-based data processing**

(57) An apparatus to predict future behavior of devices in an industrial automation environment is provided. The apparatus includes a non-transitory computer-readable storage medium configured to store program instructions, and program instructions stored on the non-transitory computer-readable storage medium. The program instructions direct a processor within a stream-based processing system to receive a first raw data stream from a first manufacturing data source, and to analyze the first raw data stream with respect to behavior data corresponding to the first manufacturing data source. The program instructions also direct the processor to predict future behavior of one or more device associated with the first manufacturing data source, based on the analysis of the first raw data stream and the behavior data corresponding to the first manufacturing data source, and to perform an action based on the predicted future behavior of the one or more device.

RECEIVE A FIRST RAW DATA STREAM FROM A FIRST MANUFACTURING DATA SOURCE **100**

ANALYZE THE FIRST RAW DATA STREAM WITH RESPECT TO BEHAVIOR DATA CORRESPONDING TO THE FIRST MANUFACTURING SOURCE **102**

PREDICT FUTURE BEHAVIOR OF ONE OR MORE DEVICE ASSOCIATED WITH THE FIRST MANUFACTURING DATA SOURCE BASED ON THE ANALYSIS OF THE FIRST RAW DATA STREAM AND THE BEHAVIOR DATA **104**

PERFORM AN ACTION BASED ON THE PREDICTED FUTURE BEHAVIOR OF THE ONE OR MORE DEVICE **106**

Figure 1

**Description**

RELATED APPLICATIONS

This application hereby claims the benefit of and priority to U.S. Provisional Patent Application Number 61/837,339, titled "INFORMATION PLATFORM FOR INDUSTRIAL AUTOMATION STREAM-BASED DATA PROCESSING", filed on June 20, 2013 and which is hereby incorporated by reference in its entirety.

TECHNICAL BACKGROUND

Industrial automation environments commonly produce enormous amounts of raw data, such as operating conditions, during normal operation. This data is used to determine how well the processes in the industrial automation environment are operating. Typically, engineers and operators will periodically analyze groups of data to determine if the equipment is operating within desired limits.

For example, engineers use control charts to analyze trends in critical parameters such as a film thickness, temperature, pressure, or the like. When trends are detected, engineers may choose to adjust, repair, or replace the piece of equipment before defective products are produces. Software tools are available to help generate and analyze control charts and other data analysis tools. Usually these software tools are configured to periodically analyze raw data after it has been collected and stored in a computer.

OVERVIEW

In an embodiment, an apparatus to predict future behavior of devices in an industrial automation environment is provided. The apparatus includes a non-transitory computer-readable storage medium configured to store program instructions, and program instructions stored on the non-transitory computer-readable storage medium.

The program instructions direct a processor within a stream-based processing system to receive a first raw data stream from a first manufacturing data source, and to analyze the first raw data stream with respect to behavior data corresponding to the first manufacturing data source. The program instructions also direct the processor to predict future behavior of one or more device associated with the first manufacturing data source, based on the analysis of the first raw data stream and the behavior data corresponding to the first manufacturing data source, and to perform an action based on the predicted future behavior of the one or more device.

In another embodiment, a method for operating a stream-based processing engine to predict future behavior of devices in an industrial automation environment is provided. The method includes receiving a first raw data stream from a first manufacturing data source, and analyzing the first raw data stream with respect to behavior data corresponding to the first manufacturing data source. The method also includes predicting future behavior of one or more device associated with the first manufacturing data source, based on the analysis of the first raw data stream and the behavior data corresponding to the first manufacturing data source, and performing an action based on the predicted future behavior of the one or more device.

In a further embodiment, a stream-based processing engine is provided. The stream-based processing engine includes an input device configured to receive a raw data stream from a manufacturing data source, and a storage system coupled to the input port configured to store behavior data and program instructions.

The stream-based processing engine also includes a processor configured to execute the program instructions. In response to the program instructions, the processor is configured to analyze the raw data stream with respect to behavior data corresponding to the manufacturing data source, predict future behavior of one or more device associated with the manufacturing data source, based on the analysis of the raw data stream and the behavior data corresponding to the manufacturing data source, and to perform an action based on the predicted future behavior of the one or more device. The stream-based processing engine also includes a display coupled to the processor configured to display information about the action to a user.

This Overview is provided to introduce a selection of concepts in a simplified form that are further described below in the Technical Disclosure. It should be understood that this Overview is not intended to identify key features or essential features of the claimed subject matter, nor is it intended to be used to limit the scope of the claimed subject matter.

BRIEF DESCRIPTION OF THE DRAWINGS

Figure 1 illustrates the operation of a stream-based processing engine to predict future behavior of devices in an industrial automation environment.

Figure 2 illustrates a block diagram of a stream-based processing engine to predict future behavior of devices in an industrial automation environment.

Figure 3 illustrates a customer-device matrix used in a stream-based processing engine to predict future behavior of devices in an industrial automation environment.

Figure 4 illustrates a block diagram of a stream-based processing engine to predict future behavior of devices in an industrial automation environment.

Figure 5 illustrates a block diagram of an example data flow within a stream-based processing engine to predict future behavior of devices in an industrial automation environment.

Figure 6 illustrates a block diagram of an example data flow within a stream-based processing engine to perform complex event detection including predicting future behavior of devices in an industrial automation environment.

Figure 7 illustrates a block diagram of a stream-based processing engine to perform complex event detection including predicting future behavior of devices in an industrial automation environment.

DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

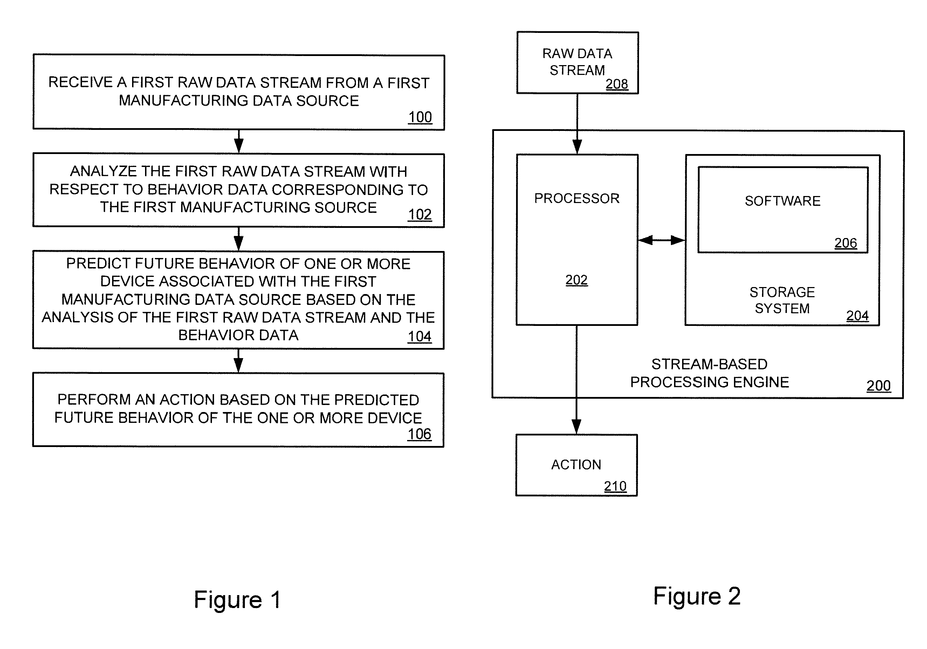

Figure 1 illustrates the operation of a stream-based processing engine to predict future behavior of devices in an industrial automation environment. In this example embodiment of a method of operating a stream-based processing engine to predict future behavior of devices in an industrial automation environment, a first raw data stream is processed using one or more stream-based processing engines. Various operations of this method may be performed by one or more processing engine, and there is no need to tie any operation to any specific processing engine as general purpose computers may be configured to operate as a capable of performing the operations of the method described herein.

A stream-based processing engine receives first raw data stream from a first manufacturing data source, (operation 100). The first raw data stream is produced by a manufacturing data source such as devices or machines in their operation and is pushed to the stream-based processing engine without any request for data from the stream-based processing engine.

A device may include, but is not limited to, any industrial equipment including machines, controllers, industrial control components, motor control devices, sensing devices, safety technology devices, security devices, drives, software and sensors. Devices may also include manufacturing equipment, handlers, process equipment, and metering equipment, all of which may be potential sources of data. In general, a device includes any mechanism configured to move, measure, process, store, work, assist, or otherwise perform a task. Likewise, manufacturing data sources may include any of the devices described above, or any device capable of generating a raw data stream.

In this example, the stream-based processing engine analyzes the first raw data stream with respect to behavior data corresponding to the first manufacturing data source, (operation 102). The stream-based processing engine receives the raw data stream as it is created in real-time. This stream is analyzed with respect to behavior data corresponding to the first manufacturing data source. The behavior data used in this operation may take any of a wide variety of forms. In a simple example, the behavior data may comprise the operating limits of a device or machine and the raw data stream is compared to these operating limits to determine when the device or machine is operating outside of its operating limits.

Other examples of behavior data may include historical data from the first manufacturing source or from other sources similar to the first manufacturing source. For example, where a plurality of identical devices or machines are in use, the behavior data may include historical data from all of the devices or machines in addition to the device or machine corresponding to the first raw data stream. These devices or machines may be physically located in various different industrial operating environments at various different geographical locations.

Behavior data may also include indications of when similar devices and machines experienced failures, and upon analysis with the first raw data stream may be used to signal when a device is demonstrating behavior similar to that which other devices demonstrated prior to failure. This allows the repair or replacement of devices before actual failure.

Based on the analysis of the first raw data stream and the behavior data, future behavior of one or more device associated with the first manufacturing data source is predicted, (operation 104). This prediction of future behavior of the device may be used to anticipate maintenance, repair, or replacement of the device, without waiting for the device to actually fail.

The stream-based processing engine performs an action based on the predicted future behavior of the one or more device, (operation 106). This action may include displaying or sounding warnings or alarms, displaying processed statistical data, triggering alarms or alerts, or the like.

In other embodiments, two or more raw data streams may be received and analyzed simultaneously. For example, in an industrial automation environment including two identical devices or machines, their raw data streams may be analyzed simultaneously with respect to behavior data related to the two devices or machines or to behavior data related to a plurality of similar machines. In an embodiment configured to receive raw data streams from a plurality of machines owned by a plurality of customers, the raw data streams may be analyzed with respect to behavior data from similar devices used by other customers. In such an example, raw data streams are collected at a data center by a plurality of stream-based processing engines. Behavior data may be compiled from multiple customers and used in the analysis of incoming raw data without individual customers having any access to data from other customers.

This allows the stream-based processing engines in the central data center to use aggregated behavior data in the analysis of incoming raw data streams to predict future performance of the associated device or machine without the various customers having to share any confidential data. Optionally, the behavior data may be updated with respect to the raw data stream to include any desired history or operation data contained within the raw data stream.

Referring now Figure 2, stream-based processing engine 200 and the associated discussion are intended to provide a brief, general description of a suitable computing environment in which the process illustrated in Figure 1 may be implemented. Many other configurations of computing devices and software computing systems may be employed to implement a system for the display of multiple errors on a human machine interface.

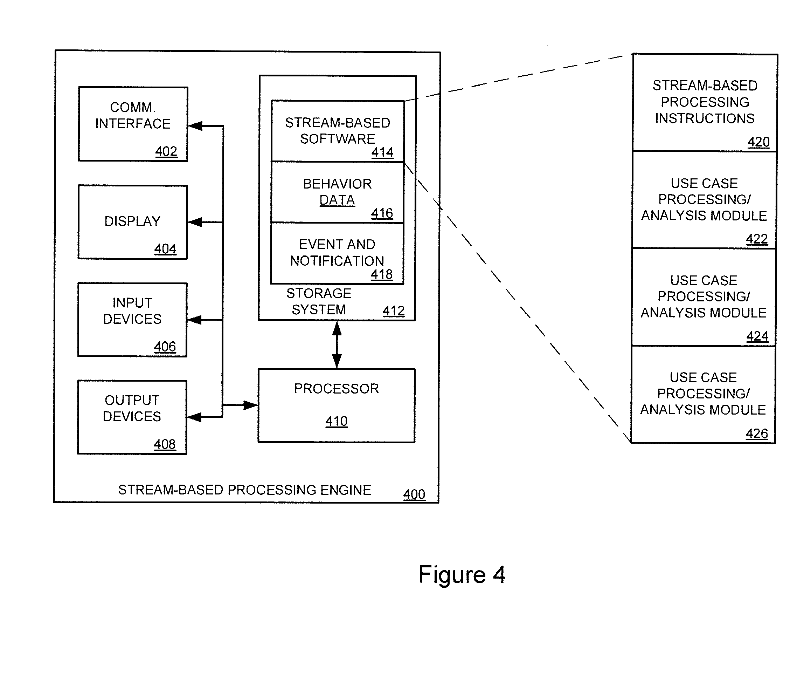

Stream-based processing engine 200 may be any type of computing system, such as a server computer, client computer, internet appliance, or any combination or variation thereof. Figure 4, discussed in more detail later, provides a more detailed illustration of an example stream-based processing engine. Indeed, stream-based processing engine 200 may be implemented as a single computing system, but may also be implemented in a distributed manner across multiple computing systems. For example, stream-based processing engine 200 may be representative of a server system (not shown) within which computer systems (not shown) running software 206 may communicate to enable stream-based processing system features. However, stream-based processing engine 200 may also be representative of the computer systems that run software 206. Indeed, stream-based processing engine 200 is provided as an example of a general purpose computing system that, when implementing the method illustrated in Figure 1, becomes a specialized system capable of operating as a stream-based processing engine to predict future behavior of devices in an industrial automation environment.

Stream-based processing system 200 includes processor 202, storage system 204, and software 206. Processor 202 is communicatively coupled with storage system 204. Storage system 204 stores data and stream-based processing software 206 which, when executed by processor 202, directs stream-based processing engine 200 to operate as described for the method illustrated in Figure 1.

Referring still to Figure 2, processor 202 may comprise a microprocessor and other circuitry that retrieves and executes stream-based processing software 206 from storage system 204. Processor 202 may be implemented within a single processing device but may also be distributed across multiple processing devices or sub-systems that cooperate in executing program instructions. Examples of processor 202 include general purpose central processing units, application specific processors, and graphics processors, as well as any other type of processing device.

Storage system 204 may comprise any storage media readable by processor 202 and capable of storing data and stream-based processing software 206. Storage system 204 may include volatile and nonvolatile, removable and non-removable media implemented in any method or technology for storage of information, such as computer readable instructions, data structures, program modules, or other data. Storage system 204 may be implemented as a single storage device but may also be implemented across multiple storage devices or sub-systems. Storage system 204 may comprise additional elements, such as a controller, capable of communicating with processor 202.

Examples of storage media include random access memory, read only memory, magnetic disks, optical disks, and flash memory, as well as any combination or variation thereof, or any other type of storage media. In some implementations, the storage media may be a non-transitory storage media. In some implementations, at least a portion of the storage media may be transitory. It should be understood that in no case is the storage media a propagated signal.

Stream-based processing software 206 comprises computer program instructions, firmware, or some other form of machine-readable processing instructions having at least some portion of the method illustrated in Figure 1 embodied therein. Stream-based processing software 206 may be implemented as a single application but also as multiple applications. Stream-based processing software 206 may be a stand-alone application but may also be implemented within other applications distributed on multiple devices, including but not limited to other stream-based processing software and operating system software.

In general, stream-based processing software 206 may, when loaded into processor 202 and executed, transform processor 202, and stream-based processing engine 200 overall, from a general-purpose computing system into a special-purpose computing system customized to act as a stream-based processing engine as described by the method illustrated in Figure 1 and its associated discussion.

Encoding stream-based processing software 206 may also transform the physical structure of storage system 204. The specific transformation of the physical structure may depend on various factors in different implementations of this description. Examples of such factors may include, but are not limited to: the technology used to implement the storage media of storage system 204, whether the computer-storage media are characterized as primary or secondary storage, and the like.

For example, if the computer-storage media are implemented as semiconductor-based memory, stream-based processing software 206 may transform the physical state of the semiconductor memory when the software is encoded therein. For example, stream-based processing software 206 may transform the state of transistors, capacitors, or other discrete circuit elements constituting the semiconductor memory.

A similar transformation may occur with respect to magnetic or optical media. Other transformations of physical media are possible without departing from the scope of the present description, with the foregoing examples provided only to facilitate this discussion.

Referring again to Figures 1 and 2, through the operation of stream-based processing engine 200 employing stream-based processing software 206, transformations are performed on raw data stream 208, resulting in action 210. As an example, raw data stream 208 could be considered transformed from one state to another by the transformation of various elements of graphical error data contained therein.

Stream-based processing engine 200 may have additional devices, features, or functionality. Stream-based processing engine 200 may optionally have input devices such as a keyboard, a mouse, a voice input device, or a touch input device, and comparable input devices. Output devices such as a display, speakers, printer, and other types of output devices may also be included. Stream-based processing engine 200 may also contain communication connections and devices that allow stream-based processing engine 200 to communicate with other devices, such as over a wired or wireless network in a distributed computing and communication environment. These devices are well known in the art and need not be discussed at length here.

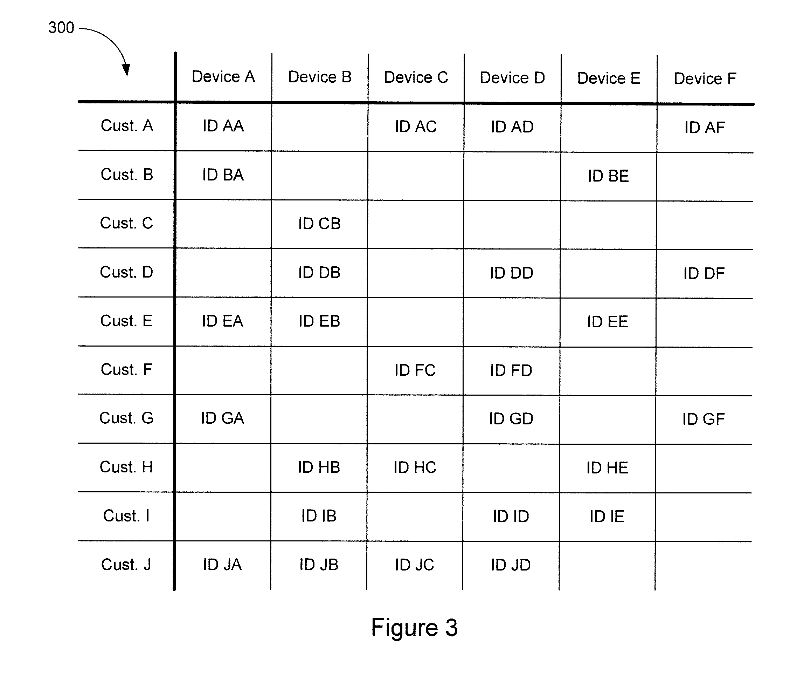

Figure 3 illustrates a customer-device matrix 300 used in a stream-based processing engine to predict future behavior of devices in an industrial automation environment. In this example, ten different customers have various combinations of six different devices in their various industrial automation environments. Within the matrix are various identification tags for each of the devices. Each identification tag corresponds to one or more raw data stream received by stream-based processing engine 200.

In this example, customers A, B, E, G, and J each have at least one instance of Device A in production. Data streams corresponding to ID AA, ID BA, ID EA, ID GA, and ID JA may be used to generate behavior data which then may be analyzed with respect to each individual data stream from each instance of Device A to predict the future behavior of the current device. None of the customers is able to see the data from each of the other customers, but all of the data is used in compiling the behavior data.

Analysis of streams of raw data with respect to behavior data may take many different forms. In a simple use case, the behavior data contains operating limits and the raw stream data is compared to the operating limits and is flagged when it exceeds those limits. Other, more complicated, use cases may provide more information about the future performance of the devices. These various use cases are implemented as stream-based rules and operators running on stream-based processing engine 200 and stored as software 206 in storage system 204. This provides for a deep symmetry allowing the same skillset to be used in those three layers. Use case processing software modules may be thought of as interchangeable modules configured to couple with general purpose stream-based processing engine 200. Each use case processing software module may be designed to perform a specific analysis on raw data stream 208 and the behavior data, and multiple use case processing software modules may be used in a single application. These use case processing software modules operate on raw data streams 208 in real-time as it is received by general purpose stream-based processing engine 200.

A very wide variety of use case processing modules may be configured to perform various analyses on raw data stream 208. For example, a use case processing module may be configured for data cleansing and/or anomaly detection where data point outliers are removed based on cluster analysis or time series outlier detection. This use case processing module may be used for noise reduction.

Another use case processing module may be configured for data validation and/or sensor diagnostics where the engine determines if the value returned by a sensor is outside the sensor's minimum/maximum range. It may also determine if the values retrieved from multiple temperature sensors attached to a tank are consistent with possible temperature profiles.

Another use case processing module may be configured for statistical process control where the engine detects process instabilities using statistical process control methods such as those illustrated by the Western Electric rules operating on consecutive data points.

Another use case processing module may be configured for equipment failure detection where the engine detects when motors spin too fast due to the absence of a load. The engine also correlates multiple values such as determining if the flow through a valve is greater than zero (or a small threshold) even though the valve indicates that it is closed (opposite logic is used for the 'valve open' case). The engine also observes conditions over a period of time such as determining if a valve takes longer than expected to change from closed to open or vice versa, or if a motor has reached a minimum expected speed some given time after a motor start.

Another use case processing module may be configured for the detection of incorrect usage patterns. Incorrect usage patterns such as too frequent, consecutive motor starts may indicate equipment failure. This engine may be used to generate evidence showing misuse of equipment with regard to a warranty claim. The engine may also be used to determine the quality of power input to the equipment by detecting a number of voltage spikes, and the voltage spikes may be weighted by duration and height.

Another use case processing module may be configured for predictive maintenance and analysis such as by monitoring the rate with which the pressure differential between the front and the back of a filter builds up over time indicating when the filter will need to be replaced. The engine may be configured to apply different rules if the equipment is new, and to apply different rules depending on the vendor of the raw material.

More complex uses include configuring the use case processing module to provide nested alarms, or to provide a warning before an alarm. Since raw data stream 208 is processed in real-time, the module may be configured to determine the duration that raw data stream 208 is above or below a threshold.

Use case processing modules may also be configured for time period detection to establish batch records based on two events: batch start, and batch end. On batch end, the engine waits for a period of time then collects aggregates over the time period covered by the batch. This engine may also be configured to allow for simple or complex shift rules including special cases for legal holidays, etc. The engine may configured to provide nested state management based on individual value transitions such as nested LoLo, Lo, Hi, HiHi alarm hierarchies.

Another use case processing module may be configured for determining overall equipment effectiveness (OEE). Overall equipment effectiveness may be calculated as:

$$OEE = \frac{RunningTime}{AvailableTime} \times \frac{ActualProduction}{TargetProduction} \times \frac{ScrapProduction}{TotalProduction} \ .$$

This engine may also be configured to keep track of (prioritized or hierarchical) downtime states aggregated over relatively short time periods. Further, given states may need to be split into multiple time periods if a shift change or a product change occurs while the system is in the given state. Without keeping track of the detailed state information, the OEE score can be calculated, but there is no indication of why any given OEE score is below 100%.

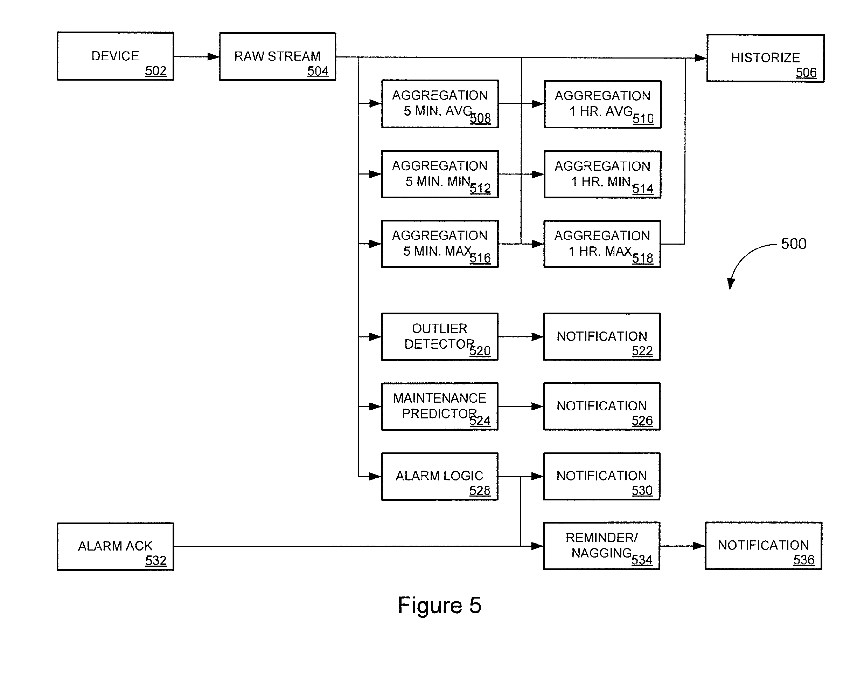

Another use case processing module may be configured as a time series store where the engine historizes the raw data stream by feeding into multiple aggregation streams. For example, an engine configured to calculate a five minute average may feed into another engine configured to use the five minute average to aggregate an hourly average, which may be feed into another engine to aggregate a daily average. Such an example of multiple use case processing modules operating in series is illustrated in Figure 5.

Another simple use case processing module may be configured to provide a replay history of the machine data. For example, a dashboard that typically operates on live values may operate against a stream of data that is replayed (possibly at a slower or faster speed) from recorded history.

As can be seen by the description above, any number of use case processing modules may be used as modules (in serial and/or parallel configurations) in constructing a stream-based processor that processes one or more raw machine data streams into usable outputs.

Further, multiple general purpose stream-based processing engines 200 may be used in constructing the stream-based processor allowing for the convergence of multiple raw data streams into any number of use case processing modules.

Currently, point solutions exist for many of the use cases listed above, however, they are implemented as point solutions and often require completely different applications. There is no re-use of rule blocks. Chaining, let alone composing of multiple rule blocks, is not currently supported.

OEE as implemented today can be used as a stand-in for many applications that fall into this category. It is a typical example of a bolted on application. As such, it has its own internal data structures and specific configuration. It internally keeps very valuable near real-time information but since the application is isolated from other potential users, it is difficult or near impossible to hook this information into the general alarm management and notification capabilities. Equally important is the fact that the OEE application cannot benefit from the data cleansing, calculations, etc. listed above unless the implementation is repeated all over.

Partly as a side effect of these limitations, but mainly due to previously unavailable frameworks, many of the use cases listed above are implemented as post processing steps that query the recorded history and work on chunks of queried data.

Another side effect is that many of the use cases listed above are simply not available in applications that operate solely on real-time data (e.g., human-machine interface (HMI) application, or controller systems) even though equipment maintenance prediction, equipment failure analysis, and many others of the more advanced use cases would be of crucial importance to operators.

Figure 4 illustrates a block diagram of a stream-based processing engine to predict future behavior of devices in an industrial automation environment. The method illustrated in Figure 1 is implemented on one or more stream-based processing engine 400, as shown in Figure 4. Stream-based processing engine 400 includes communication interface 402, display 404, input devices 406, output devices 408, processor 410, and storage system 412. Processor 410 is linked to communication interface 402, display 404, input devices 406, output devices 408, and storage system 412. Storage system 412 includes a non-transitory memory device that stores stream-based software 414, behavior data 416, and event and notification module 418.

Communication interface 402 includes components that communicate over communication links, such as network cards, ports, RF transceivers, processing circuitry and software, or some other communication devices. Communication interface 402 may be configured to communicate over metallic, wireless, or optical links. Communication interface 402 may be configured to use TDM, IP, Ethernet, optical networking, wireless protocols, communication signaling, or some other communication format - including combinations thereof.

Display 402 may be any type of display capable of presenting information to a user. Displays may include touch screens in some embodiments. Input devices 406 include any device capable of capturing user inputs and transferring them to computer aided design system 400. Input devices 406 may include a keyboard, mouse, touch pad, or some other user input apparatus. Output devices 408 include any device capable of transferring outputs from computer aided design system 400 to a user. Output devices 408 may include printers, projectors, displays, or some other user output apparatus. Display 404, input devices 406, and output devices 408 may be external to computer aided design system 400 or omitted in some examples.

Processor 410 includes a microprocessor and other circuitry that retrieves and executes stream-based software 414 from storage system 412. Storage system 412 includes a disk drive, flash drive, data storage circuitry, or some other non-transitory memory apparatus. Stream-based software 414 includes computer programs, firmware, or some other form of machine-readable processing instructions. Stream-based software 414 may include an operating system, utilities, drivers, network interfaces, applications, or some other type of software. When executed by processing circuitry, stream-based software 414 directs processor 410 to operate steam-based processing engine 400 according to the method illustrated in Figure 1.

In this example, stream-based software 414 includes stream-based processing instructions 420, which direct processor 410 to operate according to the method illustrated in Figure 1. Stream-based software 414 also includes use case processing/analysis modules 422, 424, and 426. The various use case modules direct processor 410 to analyze the raw data stream with respect to behavior data 416 to predict future behavior of a device corresponding to the raw data stream.

In this example, stream-based processing engine 400 executes a number of methods stored as stream-based software 414 within storage system 412. The results of these methods are displayed to a user via display 404, or output devices 408. Input devices 406 allow one or more machines to send a raw machine data stream to stream-based processor 400.

For example, processor 410 receives a raw data stream either from communication interface 402 or input devices 406. Processor 410 then operates on the raw machine data stream to perform an action which may be displayed on display 404, or output through output devices 408.

Figure 5 illustrates a block diagram of an example data flow within a stream-based processing engine 400 to predict future behavior of devices in an industrial automation environment. One of the key benefits of a stream-based data flow is the ability to chain, join, split streams and reason over time periods. Figure 5 illustrates a fairly typical data flow. Almost all of the shown stream blocks include time period based algorithms which in some cases (outlier/anomaly detector, maintenance predictor, and alarm logic) may be arbitrarily complex.

This example data flow receives a raw machine data stream 504 from device 502, and alarm acknowledgement 532 as inputs. The raw machine data stream 504 is processed by a general purpose stream-based processing engine (not shown) into machine data which is then used by a multitude of use case processing engines to process the machine data. The stream-based processing engine is the fabric that all the modules, with the exception of the 'machine', 'Historize', and 'Notification' modules, run on. The stream-based processing engine does not end its job after generating machine data. For example, five minute average aggregation module 508 is one of the use case processing engines configured to process the machine data. In this example, it produces a five minute aggregation of the machine data. The output of this module 508 is then provided to one hour average aggregation module 510, which produces a 1 hour aggregation of the machine data based on the five minute aggregation of the machine data. This output is then used by data analysis module historize 506 to produce a control chart or other indication of the five minute and one hour aggregations of the machine data.

Other use case processing engines used to generate data for the historize module 506 include five minute minimum aggregation module 512, one hour minimum aggregation module 514, five minute maximum aggregation module 516, and one hour maximum aggregation module 518.

Four different use case processing engines are used to trigger notifications. Outlier detector module 520 produces notification 522. Maintenance predictor module 524 produces notification 526. Alarm logic module 528 produces notification 530 gated by alarm ACK input 532. Reminder/nagging module produces notification 536 based on the output of alarm logic module 528 and alarm ACK input 532. While the use case processing engines illustrated by this example do not specifically include the prediction of future behavior, but capture current states and their history, by modifying the processing engines, behavior prediction may easily be added to this example.

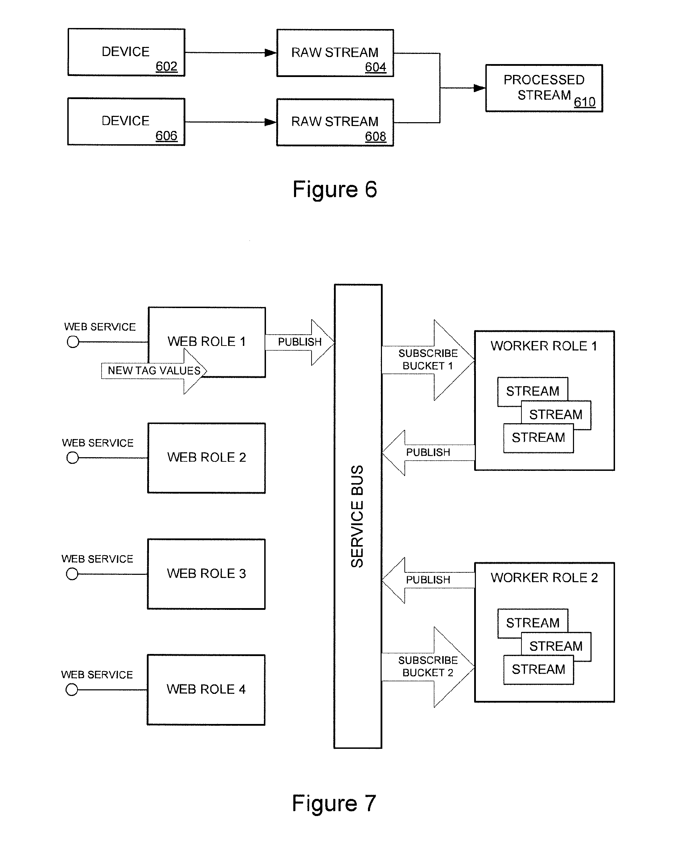

Figure 6 illustrates a block diagram of an example data flow within stream-based processing engine 400 to perform complex event detection including predicting future behavior of devices in an industrial automation environment. Note that multiple general purpose stream-based processing engines 400 may be used to perform operations on multiple raw machine data streams. In this example, device 602 produces raw stream 604 while device 606 produces raw stream 608. These two streams may then be combined to produce processed stream 610.

In this case, the expression logic moves into the stream execution block and as a result the processed stream is automatically calculated in real-time. Note that the processed stream is based on a very simple expression like 'stream1 + stream2' and plugs into the infrastructure in the same way that a significantly more complex, time based, expression (e.g., 'number of times the input's value was above a given threshold during the last five minutes') is encoded. Currently the two 'expressions' require fundamentally different engines, and while the output of one can be consumed by the other, it is extremely inefficient to do so. Hence it is very rarely done.

Figure 7 illustrates a block diagram of a stream-based processing engine 400 to perform complex event detection including predicting future behavior of devices in an industrial automation environment. The use case processing modules produce calculated tags. These calculated tags are dependent on other tags providing the inputs for the calculations. This forms nested hierarchical dependency chains since very often higher level calculated tags depend on lower level calculated tags. The same nested dependencies exist for the streams. This means that incoming changes potentially need to trickle through a very large number of streams. In larger systems it is very likely that the involved streams will reside in different processes (worker roles). Figure 7 illustrates how the complete set of streams might be split into buckets that are spread across multiple worker roles (or server machines on-premises).

As those of skill in the art will understand, as the number of streams increases, the memory requirement also increases, and my act as a limiter on the number of streams that may be processed simultaneously. Another concern is that the states of the various streams may need to be persisted before the server (worker roles) restarts. On start all persisted streams would then have to be reconstituted before new data is accepted.

Under normal circumstances data arrives in order; i.e., with ever increasing time stamps. However, if a cloud gateway loses connection with the cloud it goes into store and forward mode, locally spooling the data. Once reconnected, the gateway continues sending the current live values and in the background uploads the previously spooled data. As a result the spooled data arrives after the latest live values are uploaded. A similar situation can occur if data is manually uploaded or manually corrected after the initial upload. The general purpose stream-based processing engine may need to be configured to gracefully handle out of order data.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. As a result, the invention is not limited to the specific embodiments described above, but only by the following claims and their equivalents.

**The following is a list of further preferred embodiments of the invention:**

Embodiment 1. An apparatus to predict future behavior of devices in an industrial automation environment comprising:

a non-transitory computer-readable storage medium configured to store program instructions; and

program instructions stored on the non-transitory computer-readable storage medium directing a processor within a stream-based processing system to:

receive a first raw data stream from a first manufacturing data source;

analyze the first raw data stream with respect to behavior data corresponding to the first manufacturing data source;

predict future behavior of one or more device associated with the first manufacturing data source, based on the analysis of the first raw data stream and the behavior data corresponding to the first manufacturing data source; and

perform an action based on the predicted future behavior of the one or more device.

Embodiment 2. The apparatus of embodiment 1 wherein the program instructions stored on the non-transitory computer-readable storage medium further direct the processor within the stream-based processing system to:

update the behavior data based on the first raw data stream.

Embodiment 3. The apparatus of embodiment 1 wherein the first manufacturing data source is a controller from the one or more device associated with the first manufacturing data source.

Embodiment 4. The apparatus of embodiment 1 wherein the first manufacturing data source is a sensor from the one or more device associated with the first manufacturing data source.

Embodiment 5. The apparatus of embodiment 1 wherein the behavior data comprises historical data from the first manufacturing data source.

Embodiment 6. The apparatus of embodiment 1 wherein the behavior data comprises historical data from a plurality of manufacturing data sources.

Embodiment 7. The apparatus of embodiment 1 wherein the action performed is an alert when the predicted future behavior of the one or more devices comprises a failure.

Embodiment 8. The apparatus of embodiment 1 wherein the program instructions stored on the non-transitory computer-readable storage medium further direct the processor within the stream-based processing system to:

receive a second raw data stream from a second manufacturing data source;

analyze the first and second raw data streams with respect to behavior data corresponding to the first and second manufacturing data sources;

predict future behavior of one or more device associated with the first and second manufacturing data sources, based on the analysis of the first and second raw data streams and the behavior data corresponding to the first and second manufacturing data sources; and

perform an action based on the predicted future behavior of the one or more device.

Embodiment 9. The apparatus of embodiment 8 wherein the first and second manufacturing data sources are within different industrial automation environments at separate physical locations.

Embodiment 10. A method for operating a stream-based processing engine to predict future behavior of devices in an industrial automation environment, the method comprising:

receiving a first raw data stream from a first manufacturing data source;

analyze the first raw data stream with respect to behavior data corresponding to the first manufacturing data source;

predicting future behavior of one or more device associated with the first manufacturing data source, based on the analysis of the first raw data stream and the behavior data corresponding to the first manufacturing data source; and

performing an action based on the predicted future behavior of the one or more device.

Embodiment 11. The method of embodiment 10 further comprising updating the behavior data based on the first raw data stream.

Embodiment 12. The method of embodiment 10 wherein the first manufacturing data source is a controller from the one or more device associated with the first manufacturing data source.

Embodiment 13. The method of embodiment 10 wherein the first manufacturing data source is a sensor from the one or more device associated with the first manufacturing data source.

Embodiment 14. The method of embodiment 10 wherein the behavior data comprises historical data from the first manufacturing data source.

Embodiment 15. The method of embodiment 10 wherein the behavior data comprises historical data from a plurality of manufacturing data sources.

Embodiment 16. The method of embodiment 10 wherein the action performed is an alert when the predicted future behavior of the one or more devices comprises a failure.

Embodiment 17. The method of embodiment 1 further comprising:

receiving a second raw data stream from a second manufacturing data source;

analyze the first and second raw data streams with respect to behavior data corresponding to the first and second manufacturing data sources;

predicting future behavior of one or more device associated with the first and second manufacturing data sources, based on the analysis of the first and second raw data streams and the behavior data corresponding to the first and second manufacturing data sources; and

performing an action based on the predicted future behavior of the one or more device.

Embodiment 18. The method of embodiment 17 wherein the first and second manufacturing data sources are within different industrial automation environments at separate physical locations.

Embodiment 19. A stream-based processing engine comprising:

an input device configured to receive a raw data stream from a manufacturing data source;

a storage system coupled to the input port configured to store behavior data and program instructions;

a processor configured to execute the program instructions, and in response to the program instructions to:

analyze the raw data stream with respect to behavior data corresponding to the manufacturing data source;

predict future behavior of one or more device associated with the manufacturing data source, based on the analysis of the raw data stream and the behavior data corresponding to the manufacturing data source; and

perform an action based on the predicted future behavior of the one or more device; and

a display coupled to the processor configured to display information about the action to a user.

Embodiment 20. The stream-based processing engine of embodiment 19 wherein the behavior data comprises historical data from a plurality of manufacturing data sources.

**Claims**

1. An apparatus to predict future behavior of devices in an industrial automation environment comprising:

   a non-transitory computer-readable storage medium configured to store program instructions; and
   program instructions stored on the non-transitory computer-readable storage medium directing a processor within a stream-based processing system to:

   receive a first raw data stream from a first manufacturing data source;
   analyze the first raw data stream with respect to behavior data corresponding to the first manufacturing data source;
   predict future behavior of one or more device associated with the first manufacturing data source, based on the analysis of the first raw data stream and the behavior data corresponding to the first manufacturing data source; and
   perform an action based on the predicted future behavior of the one or more device.

2. The apparatus of claim 1 wherein the program instructions stored on the non-transitory computer-readable storage medium further direct the processor within the stream-based processing system to:

   update the behavior data based on the first raw data stream.

3. The apparatus of claim 1 wherein the first manufacturing data source is a controller from the one or more device associated with the first manufacturing data source; or
   wherein the first manufacturing data source is a sensor from the one or more device associated with the first manufacturing data source.

4. The apparatus of any one of claims 1 to 3 wherein the behavior data comprises historical data from the first manufacturing data source; or
   wherein the behavior data comprises historical data from a plurality of manufacturing data sources.

5. The apparatus of any one of claims 1 to 4 wherein the action performed is an alert when the predicted future behavior of the one or more devices comprises a failure.

6. The apparatus of any one of claims 1 to 5 wherein the program instructions stored on the non-transitory computer-readable storage medium further direct the processor within the stream-based processing system to:

   receive a second raw data stream from a second manufacturing data source;
   analyze the first and second raw data streams with respect to behavior data corresponding to the first and second manufacturing data sources;
   predict future behavior of one or more device associated with the first and second manufacturing data sources, based on the analysis of the first and second raw data streams and the behavior data corresponding to the first and second manufacturing data sources; and
   perform an action based on the predicted future behavior of the one or more device.

7. The apparatus of claim 6 wherein the first and second manufacturing data sources are within different industrial automation environments at separate physical locations.

8. A method for operating a stream-based processing engine to predict future behavior of devices in an industrial automation environment, the method comprising:

   receiving a first raw data stream from a first manufacturing data source;
   analyze the first raw data stream with respect to behavior data corresponding to the first manufacturing data source;
   predicting future behavior of one or more device associated with the first manufacturing data source, based on the analysis of the first raw data stream and the behavior data corresponding to the first manufacturing data source; and
   performing an action based on the predicted future behavior of the one or more device.

9. The method of claim 8 further comprising updating the behavior data based on the first raw data stream.

10. The method of claim 8 or 9 wherein the first manufacturing data source is a controller from the one or more device associated with the first manufacturing data source; or wherein the first manufacturing data source is a sensor from the one or more device associated with the first manufacturing data source.

11. The method of any one of claims 8 to 10 wherein the behavior data comprises historical data from the first manufacturing data source; or
wherein the behavior data comprises historical data from a plurality of manufacturing data sources; or
wherein the action performed is an alert when the predicted future behavior of the one or more devices comprises a failure.

12. The method of any one of claims 1 to 11 further comprising:

receiving a second raw data stream from a second manufacturing data source;
analyze the first and second raw data streams with respect to behavior data corresponding to the first and second manufacturing data sources;
predicting future behavior of one or more device associated with the first and second manufacturing data sources, based on the analysis of the first and second raw data streams and the behavior data corresponding to the first and second manufacturing data sources; and
performing an action based on the predicted future behavior of the one or more device.

13. The method of claim 12 wherein the first and second manufacturing data sources are within different industrial automation environments at separate physical locations.

14. A stream-based processing engine comprising:

an input device configured to receive a raw data stream from a manufacturing data source;
a storage system coupled to the input port configured to store behavior data and program instructions;
a processor configured to execute the program instructions, and in response to the program instructions to:

analyze the raw data stream with respect to behavior data corresponding to the manufacturing data source;
predict future behavior of one or more device associated with the manufacturing data source, based on the analysis of the raw data stream and the behavior data corresponding to the manufacturing data source; and
perform an action based on the predicted future behavior of the one or more device; and

a display coupled to the processor configured to display information about the action to a user.

15. The stream-based processing engine of claim 14 wherein the behavior data comprises historical data from a plurality of manufacturing data sources.

EP 2 816 431 A2

RECEIVE A FIRST RAW DATA STREAM FROM A FIRST
MANUFACTURING DATA SOURCE
100

ANALYZE THE FIRST RAW DATA STREAM WITH
RESPECT TO BEHAVIOR DATA CORRESPONDING TO
THE FIRST MANUFACTURING SOURCE
102

PREDICT FUTURE BEHAVIOR OF ONE OR MORE
DEVICE ASSOCIATED WITH THE FIRST
MANUFACTURING DATA SOURCE BASED ON THE
ANALYSIS OF THE FIRST RAW DATA STREAM AND THE
BEHAVIOR DATA
104

PERFORM AN ACTION BASED ON THE PREDICTED
FUTURE BEHAVIOR OF THE ONE OR MORE DEVICE
106

Figure 1

RAW DATA
STREAM
208

PROCESSOR
202

SOFTWARE
206

STORAGE
SYSTEM
204

STREAM-BASED
PROCESSING ENGINE
200

ACTION
210

Figure 2

EP 2 816 431 A2

|  | Device A | Device B | Device C | Device D | Device E | Device F |
|---|---|---|---|---|---|---|
| Cust. A | ID AA |  | ID AC | ID AD |  | ID AF |
| Cust. B | ID BA |  |  |  | ID BE |  |
| Cust. C |  | ID CB |  |  |  |  |
| Cust. D |  | ID DB |  | ID DD |  | ID DF |
| Cust. E | ID EA | ID EB |  |  | ID EE |  |
| Cust. F |  |  | ID FC | ID FD |  |  |
| Cust. G | ID GA |  |  | ID GD |  | ID GF |
| Cust. H |  | ID HB | ID HC |  | ID HE |  |
| Cust. I |  | ID IB |  | ID ID | ID IE |  |
| Cust. J | ID JA | ID JB | ID JC | ID JD |  |  |

300

Figure 3

Figure 4

STREAM-BASED PROCESSING INSTRUCTIONS 420

USE CASE PROCESSING/ ANALYSIS MODULE 422

USE CASE PROCESSING/ ANALYSIS MODULE 424

USE CASE PROCESSING/ ANALYSIS MODULE 426

STREAM-BASED SOFTWARE 414

BEHAVIOR DATA 416

EVENT AND NOTIFICATION 418

STORAGE SYSTEM 412

PROCESSOR 410

COMM. INTERFACE 402

DISPLAY 404

INPUT DEVICES 406

OUTPUT DEVICES 408

STREAM-BASED PROCESSING ENGINE 400

Figure 5

DEVICE
602

RAW STREAM
604

PROCESSED
STREAM 610

DEVICE
606

RAW STREAM
608

Figure 6

WEB SERVICE

WEB ROLE 1

PUBLISH

NEW TAG VALUES

SUBSCRIBE
BUCKET 1

WORKER ROLE 1

STREAM

STREAM

STREAM

PUBLISH

WEB SERVICE

WEB ROLE 2

SERVICE BUS

WEB SERVICE

WEB ROLE 3

PUBLISH

WORKER ROLE 2

WEB SERVICE

WEB ROLE 4

SUBSCRIBE
BUCKET 2

STREAM

STREAM

STREAM

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61837339 A